# EUROPEAN PATENT APPLICATION

(11) **EP 4 804 300 A2**
(43) Date of publication of application: **09.09.2026**
(21) Application number: 24855090.7
(22) Date of filing: 28.10.2024
(51) Int. Cl.: H01M 50/124, H01M 50/474, H01M 50/483, H01M 50/486

(54) **BATTERY CELLS AND BATTERY PACK**

(30) Priority: 01.11.2023 CN 202322954967 U
(71) Applicant: PowerCo SE, 38239 Salzgitter (DE)
(72) Inventor: WELLER, Christine, Beijing 100015 (CN); HUESKER, Jessica, Beijing 100015 (CN)
(74) Representative: MFG Patentanwälte Meyer-Wildhagen Meggle-Freund Gerhard PartG mbB
(86) International application number: PCT/IB2024/000650
(87) International publication number: WO 2025/104493

(57) **Abstract**

The present utility model provides a battery cell and a battery pack. The battery cell includes: a casing and a cell core, which is placed inside the casing, wherein the battery cell also includes an additional layer formed by coating, positioned between the cell core and the casing, this additional layer being an insulating material layer. The present utility model can achieve electrical insulation between the cell core and the casing in the battery cell.

## Description

### Technical field

The present utility model relates to the technical field of batteries, in particular to a battery cell and a battery pack.

### Background art

In the prior art, before inserting a battery cell stack or jelly roll into a battery casing, the cell stack or jelly roll is typically wrapped with an insulating film (such as polyester film). This insulating film stabilizes the cell stack or jelly roll during insertion of the cell stack or jelly roll into the casing, and electrically insulates the cell stack or jelly roll from the metal casing. However, the wrapping method and the use of tape to secure the insulating film result in the formation of irregular structures (such as irregular edges, notches and protrusions) on the surface of the cell stack or jelly roll. During battery cell operation, it is observed that the internal pressure increases due to the breathing and expansion of the cell stack or jelly roll. The irregular structures on the surface of the battery cell will reduce the battery's fast-charging capability and lifespan.

During fast charging of the battery cell, heat is generated. This heat is produced at certain points in the battery cell, leading to uneven temperature distribution within the battery cell. If the local temperature is too high, it may damage battery cell components, resulting in safety risks and reduced lifespan. Existing solutions typically involve external cooling, which cannot ensure uniform temperature distribution within individual battery cells.

Therefore, there is a need for an improved battery cell to overcome or mitigate at least some of the disadvantages present in the prior art mentioned above.

### Summary of the utility model

In the first aspect of the utility model, a battery cell is provided. It includes a casing and a cell core, which is placed inside the casing, wherein
the battery cell also includes an additional layer formed by coating, positioned between the cell core and the casing. This additional layer is an insulating material layer.

Optionally, the additional layer is a first additional layer, which is coated on an outer surface of the cell core. The first additional layer is an insulating and thermally conductive material layer or an insulating but thermally non-conductive material layer.

Optionally, the first additional layer covers 1%-99% of the outer surface of the cell core;
the thickness of the first additional layer ranges from 0.1µm to 100µm.

Optionally, the first additional layer covers 80%-99% of the outer surface of the cell core;
the thickness of the first additional layer ranges from 3µm to 20µm.

Optionally, the first additional layer is coated on the cell core by spraying, dripping, dipping, coating, or vapour deposition.

Optionally, the battery cell also includes an insulating film, with the additional layer being a second additional layer. The insulating film wraps the cell core, and the second additional layer is coated on an inner surface of the insulating film, close to the cell core. The second additional layer is an insulating and thermally conductive material layer.

Optionally, the second additional layer covers 1%-100% of the inner surface of the insulating film;
the thickness of the second additional layer ranges from 0.1µm to 100µm.

Optionally, the second additional layer covers 80%-97% of the inner surface of the insulating film;
the thickness of the second additional layer ranges from 3µm to 20µm.

Optionally, the second additional layer is coated on the insulating film by spraying, dipping, coating, or vapour deposition.

In the second aspect of the utility model, a battery pack is provided, containing multiple said battery cells.

By configuring the battery cell of the present utility model to include the casing, the cell core, and the additional layer formed by coating, and positioning the additional layer between the cell core and the casing, this additional layer being an insulating material layer, electrical insulation between the cell core and the casing can be achieved in a simple manner.

Furthermore, in the battery cell of the present utility model, the first additional layer is directly coated on the outer surface of the cell core and is an insulating and thermally conductive material layer or an insulating but thermally non-conductive material layer. This configuration achieves electrical insulation between the cell core and the casing, and when the first additional layer is an insulating and thermally conductive material layer, the first additional layer will also simultaneously perform the function of temperature conduction, leading to a more uniform temperature distribution within the battery cell. This ensures that the battery cell components will not be damaged, enhances safety, and extends the battery's lifespan.

Furthermore, the battery cell of the present utility model also includes an insulating film, the insulating film wraps the cell core, the second additional layer is coated on the inner surface of the insulating film, close to the cell core, and the second additional layer is an insulating and thermally conductive material layer, so the insulating film will simultaneously perform the function of temperature conduction, leading to a more uniform temperature distribution within the battery cell. This ensures that the battery cell components will not be damaged, enhances safety, and extends the battery's lifespan.

According to the detailed description of the specific embodiments of the utility model in combination with the attached drawings below, the above and other purposes, advantages, and features of the utility model will be better understood by skilled personnel in the field.

### Brief Description of the Drawings

Features, advantages and exemplary embodiments of the present utility model are described below with reference to the drawings, in which identical reference labels indicate identical elements, and in which:
Fig. 1 is a 3D schematic drawing of a battery cell in embodiments of the present utility model, in an exploded state.
Fig. 2 is a partial sectional schematic drawing of an embodiment of the battery cell in Fig. 1.
Fig. 3 is a partial sectional schematic drawing of another embodiment of the battery cell in Fig. 1.

### Detailed Description

The following detailed description of exemplary embodiments of the present utility model refers to the accompanying drawings. The description of exemplary embodiments is merely exemplary, and certainly not intended to limit the present utility model or its application and uses. Moreover, the dimensions and proportions of the components in the drawings are also merely illustrative and not strictly corresponding to actual products.

The utility model provides a battery cell 100, a battery pack containing multiple such battery cells 100, and a device containing one or more such battery cells 100.

In an embodiment of the present utility model, the battery cell 100 includes a casing 101 and at least one cell core 102, which is placed inside the casing 101. The battery cell 100 also includes an additional layer formed by coating, positioned between the cell core 102 and the casing 101. This additional layer is an electrically insulating material layer. By configuring the battery cell 100 in an embodiment of the present utility model to include the casing 101, the cell core 102, and the additional layer formed by coating, and positioning the additional layer between the cell core 102 and the casing 101, the additional layer being an insulating material layer, electrical insulation between the cell core 102 and the casing 101 can be achieved in a simple manner.

In the battery cell 100 in an embodiment of the present utility model, the additional layer is a first additional layer 103, which is directly applied to an outer surface of the cell core 102. The first additional layer 103 is an insulating and thermally conductive material layer or an insulating but thermally non-conductive material layer. Alternatively, the battery cell 100 also includes an insulating film 104, with the additional layer being a second additional layer 105. The insulating film 104 wraps the cell core 102, and the second additional layer 105 is applied to an inner surface of the insulating film 104, close to the cell core 102. The second additional layer 105 is an insulating and thermally conductive material layer.

By configuring the battery cell 100 in an embodiment of the present utility model to include the casing 101, the cell core 102 and also the first additional layer 103, the first additional layer 103 being directly applied to the outer surface of the cell core 102 and being an insulating and thermally conductive material layer or an insulating but thermally non-conductive material layer, electrical insulation can be achieved between the cell core 102 and the casing 101. Furthermore, when the first additional layer 103 is an insulating and thermally conductive material layer, it will also perform the function of temperature conduction, and thus can also achieve a more uniform temperature distribution within the battery cell 100, thereby ensuring that battery cell 100 components are not damaged, so have a high level of safety and a long lifespan. Additionally, due to the first additional layer 103, a surface of the cell core 102 is smooth, so the cell core 102 is able to easily slide into/be inserted into the casing 101/shell of the battery cell 100, improving battery production efficiency. In addition, since the first additional layer 103 is directly applied to the outer surface of the cell core 102, there is no need for wrapping with a conventional insulating film, so irregular edges, notches, protrusions, or securing materials (such as tape), etc. will not occur on the surface of the cell core 102. It is thus possible to ensure the battery's fast-charging capability and lifespan while eliminating the steps of wrapping and securing with tape, etc., helping to enhance battery production efficiency.

In another embodiment of the present utility model, the battery cell 100 is configured to include a casing 101, a cell core 102, an insulating film 104, and a second additional layer 105. The insulating film 104 wraps the cell core 102, and the second additional layer 105 is coated on the inner surface of the insulating film 104, close to the cell core 102. The second additional layer 105 is an insulating and thermally conductive material layer, so will simultaneously perform the function of temperature conduction, leading to a more uniform temperature distribution within the battery cell 100. This ensures that the battery cell 100 components will not be damaged, enhances safety, and extends the battery's lifespan. The second additional layer 105 also ensures the stability of the insulating film 104 wrapping. It is understood that the thickness of the insulating film 104 can be reduced when the second additional layer 105 is applied, so that the energy density of the battery cell 100 is not reduced.

The battery cell 100 in embodiments of the present utility model is typically a square battery cell, with the cell core 102 being a cell stack or jelly roll. The cell stack can also be referred to as a stacked cell, laminated cell, or stacked-type cell, etc., while the jelly roll can be referred to as a wound cell, jelly roll cell, or wound-type cell, etc. The casing 101 is usually a metal casing, such as an aluminium casing. The insulating film 104 is typically a polyester film or foil.

The battery pack in embodiments of the present utility model can include multiple said battery cells 100. The number of battery cells 100 in the battery pack can be set as actually required. For example, a battery pack contains 4 battery cells 100, 6 battery cells 100, or 12 battery cells 100.

The device in embodiments of the present utility model can include one or more said battery cells 100 and can be a mobile or stationary device; the mobile device is for example an electric vehicle.

The composition, etc. of the battery cell 100 in embodiments of the present utility model will be described in more detail below with reference to the accompanying drawings.

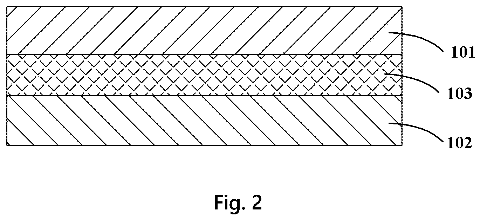

Refer to Figure 2, which is a partial cross-sectional schematic of one embodiment of the battery cell 100 of the present utility model. This battery cell 100 may include a casing 101, a cell core 102, and a first additional layer 103, with the cell core 102 positioned inside the casing 101. The first additional layer 103 is directly coated on the outer surface of cell core 102. Here, "directly" means that there are no other layers or structures between the first additional layer 103 and the cell core 102. It is understood that, in addition to the casing 101 and the cell core 102, the battery cell 100 may also include other conventional battery cell structures, such as a frame or a vent 110 on the casing 101, which are not detailed here.

The first additional layer 103 can be an insulating and thermally conductive material layer. It can also be an insulating but thermally non-conductive material layer. When the first additional layer 103 is an insulating and thermally conductive material layer, it serves both insulation and heat conduction functions, and may also provide support. Typically, when the first additional layer 103 is an insulating and thermally conductive material layer, its thermal conductivity can range from 4 W/(m·K) to 100 W/(m·K), such as 4 W/(m·K), 50 W/(m·K), or 100 W/(m·K). Preferably, it ranges from 6 W/(m·K) to 14 W/(m·K), such as 6 W/(m·K), 8 W/(m·K), or 14 W/(m·K). The thermal conductivity in the range of 6W/(m·K) to 14W/(m·K) is conducive to achieving a balance between cost and thermal conductivity. When the first additional layer 103 is an insulating but thermally non-conductive material layer, it serves the insulation function and may also provide support.

When the first additional layer is an insulating and thermally conductive material layer, the material used for the first additional layer may use an insulating and thermally conductive material of prior art. When the first additional layer 103 is an insulating and thermally non-conductive material layer, the material used for the first additional layer may use an insulating and thermally non-conductive material of prior art. The materials for the first additional layer typically can include polymers and fillers. The polymers can be selected from polyimide (PI), polyethylene terephthalate (PET), polypropylene (PP), polycarbonate (PC), eritrytol, chemically compatible adhesives, epoxy resin, and silicone rubber. The fillers can be selected from aluminium nitride (AIN), boron nitride (BN), aluminium oxide (Al₂O₃), silicon carbide (SiC), silicon dioxide (SiO₂), zinc oxide (ZnO), silicon nitride (Si₃N₄), graphite, graphene, carbon nanotubes (CNT), carbon nanofibers, and diamond. By adjusting the ratio between the polymer and the filler, materials with different properties for the first additional layer can be obtained. It is understood that the mixing methods for polymers and fillers can use any method known in the art that is able to obtain materials for the first additional layer, and are not limited here.

The first additional layer 103 can be coated on the cell core 102 by various methods such as spraying, dripping, dipping, coating (including dry and wet coating), or vapor deposition (including chemical vapor deposition (CVD) and physical vapor deposition (PVD)). It is understood that the specific implementation steps, etc. for spraying, dripping, dipping, coating or vapor deposition, etc. can follow existing technologies and are not detailed here.

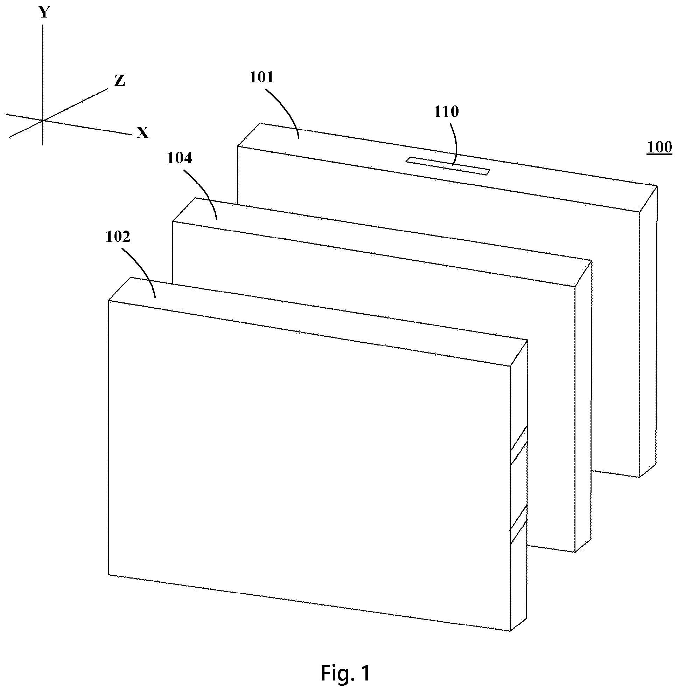

Holes for electrolyte wetting need to be retained on the cell, especially at the bottom of the cell; therefore, the first additional layer 103 can cover 1%-99% of the outer surface of the cell core 102. For example, it can cover 1%, 50%, 95%, or 99% of the outer surface of the cell core 102. Preferably, the first additional layer 103 covers 50%-95% of the outer surface of the cell core 102. Preferably, the first additional layer 103 covers 80%-99% of the outer surface of cell core 102, for example, the first additional layer 103 covers 80%, 90%, or 99% of the outer surface of cell core 102. When the first additional layer 103 covers 80-99% of the outer surface of the cell core 102, a balance between electrolyte wetting holes, insulation effect, and energy density can be achieved. This partial coverage can be achieved, for example, by using masks during the coating process on the battery cell 100 or the spray nozzle. Taking the directions shown in Figure 1 as an example, the x-direction represents left-right, the y-direction represents up-down, and the z-direction represents front-back. The first additional layer 103 can fully cover the top, left, right, front, and back surfaces of the cell core 102, while partially covering the bottom surface to retain electrolyte wetting holes. Alternatively, it can fully cover the left, right, front, and back surfaces of the cell core 102 without covering the top and bottom surfaces. It can also partially cover the left, right, front, and back surfaces of the cell core 102, and partially cover the top and bottom surfaces.

The thickness of the first additional layer 103 can range from 0.1µm to 100µm. For example, the thickness of the first additional layer 103 can be 0.1µm, 50µm, or 100µm. Preferably, the thickness of the first additional layer 103 can be 3µm to 20µm.For example, the thickness of the first additional layer 103 can be 3µm, 10µm, or 20µm. A preferred thickness of the first additional layer 103 ranging from 3µm to 20µm achieves a better balance between robustness (i.e., stability) and loss of energy density. By using the lighter and thinner first additional layer 103 and eliminating the need for tape or other fixing structures, the weight of the battery cell 100 is reduced, and its energy density is increased.

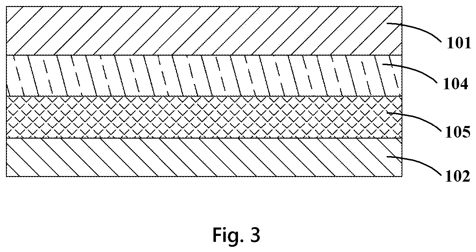

Refer to Figure 3, which is a partial cross-sectional schematic of another embodiment of the battery cell 100 of the present utility model. This battery cell 100 may include a casing 101, a cell core 102, an insulating film 104, and a second additional layer 105, with the cell core 102 positioned inside the casing 101. The insulating film 104 wraps the cell core 102, and the second additional layer 105 is coated on the inner surface of the insulating film 104, close to the cell core 102. The second additional layer 105 is an insulating and thermally conductive material layer. Similarly, in addition to the casing 101 and the cell core 102, the battery cell 100 may also include other conventional battery cell structures, such as a frame or a vent 110 on the casing 101, which are not detailed here.

The thermal conductivity of the second additional layer 105 can range from 4 W/(m·K) to 100 W/(m·K), such as 4 W/(m·K), 50 W/(m·K), or 100 W/(m·K). Preferably, it ranges from 6 W/(m·K) to 14 W/(m·K), such as 6 W/(m·K), 8 W/(m·K), or 14 W/(m·K). The thermal conductivity in the range of 6W/(m·K) to 14W/(m·K) is conducive to achieving a balance between cost and thermal conductivity.

The materials for the second additional layer can be insulating and thermally conductive materials known in the art. The materials for the second additional layer typically may include polymers and fillers. The polymers can be selected from polyimide (PI), polyethylene terephthalate (PET), polypropylene (PP), polycarbonate (PC), eritrytol, chemically compatible adhesives, epoxy resin, and silicone rubber. The fillers can be selected from aluminum nitride (AIN), boron nitride (BN), aluminum oxide (Al₂O₃), silicon carbide (SiC), silicon dioxide (SiO₂), zinc oxide (ZnO), silicon nitride (Si₃N₄), graphite, graphene, carbon nanotubes (CNT), carbon nanofibers, and diamond. It is understood that the mixing methods for polymers and fillers can use any method known in the art that is able to obtain materials for the second additional layer and are not limited here.

The second additional layer 105 can be applied to the insulating film 104 through various methods such as spraying, dipping, coating (including dry and wet coating), or vapor deposition (including chemical vapor deposition (CVD) and physical vapor deposition (PVD)). It is understood that the specific implementation steps, etc. for spraying, dipping, coating or vapor deposition, etc. can follow existing technologies and are not detailed here.

The second additional layer 105 can cover 1%-100% of the inner surface of the insulating film 104, for example, the second additional layer 105 covers 1%, 50%, or 100% of the inner surface of the insulating film 104. In a preferred embodiment, the second additional layer 105 covers 1%-99% of the inner surface of the insulating film 104. In a preferred embodiment, the second additional layer 105 covers 3%-97% of the inner surface of the insulating film 104. In a preferred embodiment, the second additional layer 105 covers 20%-80% of the inner surface of the insulating film 104. In a preferred embodiment, the second additional layer 105 covers 80%-97% of the inner surface of the insulating film 104, for example, the second additional layer 105 covers 80%, 90%, or 97% of the inner surface of the insulating film 104. This partial coverage can be achieved, for example, by using masks, etc. during the coating process on the insulating film 104 or the spray nozzle. Taking the directions shown in Figure 1 as an example, the x-direction represents left-right, the y-direction represents up-down, and the z-direction represents front-back. When observing the cell core 102 wrapped by the insulating film 104, the second additional layer 105 can fully cover the top, bottom, left, right, front, and back areas of the inner surface of the insulating film 104. Alternatively, it can fully cover the left, right, front, and back areas of the inner surface of the insulating film 104 without covering the top and bottom areas. It can also fully cover the left and right areas of the inner surface of the insulating film 104 without covering the top, bottom, front and back areas. Additionally, it can partially cover the left and right areas of the inner surface of the insulating film 104, and partially cover the top, bottom, front and back areas.

The thickness of the second additional layer 105 can be 0.1µm-100µm. For example, the thickness of the second additional layer 105 can be 0.1µm, 50µm, or 100µm. In a preferred embodiment, the thickness of the second additional layer 105 can be 3µm-20µm. For example, the thickness of the second additional layer 105 can be 3µm, 10µm, or 20µm.

In this specification, references to terms like "one embodiment," "some embodiments," "one example," "some examples," or "preferred embodiments" mean that specific features, structures, materials, or characteristics described in connection with the embodiment or example are included in at least one embodiment or example of the utility model. The indicative expressions of these terms do not necessarily refer to the same embodiment or example. Furthermore, the specific features, structures, materials, or characteristics described may be combined in a suitable manner in any one or more embodiments or examples.

The above detailed description is of embodiments of the present utility model. However, the aspects of the utility model are not limited to these embodiments. Various modifications and substitutions can be applied to the described embodiments without departing from the scope of the utility model.

## Claims

1. A battery cell, **characterized in that** the battery cell includes a casing and a cell core, which is placed inside the casing, wherein
the battery cell also includes an additional layer formed by coating, positioned between the cell core and the casing, this additional layer being an insulating material layer.

2. The battery cell as claimed in claim 1, **characterized in that**
the additional layer is a first additional layer, which is coated on an outer surface of the cell core, the first additional layer being an insulating and thermally conductive material layer or an insulating but thermally non-conductive material layer.

3. The battery cell as claimed in claim 2, **characterized in that**
the first additional layer covers 1%-99% of the outer surface of the cell core;
the thickness of the first additional layer ranges from 0.1µm to 100µm.

4. The battery cell as claimed in claim 2 or 3, **characterized in that**
the first additional layer covers 80%-99% of the outer surface of the cell core;
the thickness of the first additional layer ranges from 3µm to 20µm.

5. The battery cell as claimed in claim 2 or 3, **characterized in that** the first additional layer is coated on the cell core by spraying, dripping, dipping, coating, or vapour deposition.

6. The battery cell as claimed in claim 1, **characterized in that**
the battery cell also includes an insulating film, with the additional layer being a second additional layer, the insulating film wraps the cell core, the second additional layer is coated on an inner surface of the insulating film, close to the cell core, and the second additional layer is an insulating and thermally conductive material layer.

7. The battery cell as claimed in claim 6, **characterized in that**
the second additional layer covers 1%-100% of the inner surface of the insulating film;
the thickness of the second additional layer ranges from 0.1µm to 100µm.

8. The battery cell as claimed in claim 6 or 7, **characterized in that**
the second additional layer covers 80%-97% of the inner surface of the insulating film;
the thickness of the second additional layer ranges from 3µm to 20µm.

9. The battery cell as claimed in claim 6 or 7, **characterized in that** the second additional layer is coated on the insulating film by spraying, dipping, coating, or vapour deposition.

10. A battery pack, **characterized in that** the battery pack contains a plurality of the battery cell as claimed in any one of claims 1 - 9.
